# EUROPEAN PATENT SPECIFICATION

(11) **EP 1 318 111 B1**
(45) Date of publication and mention of the grant of the patent: **15.08.2007**
(21) Application number: 02258327.2
(22) Date of filing: 03.12.2002
(51) Int. Cl.: C03B 9/41, C03B 9/36, C03B 9/16

(54) **Glass container forming machine for blowing of a parison**
Hohlglasformmaschine zum Blasen eines Kübels
Machine à façonner le verrre creux par soufflage d'une paraison

(30) Priority: 05.12.2001 US 5394
(43) Date of publication of application: 11.06.2003
(73) Proprietor: Emhart Glass S.A., 6330 Cham (CH)
(72) Inventor: Fenton, F. Alan, Granby, Connecticut 06035 (US); Simon, Jonathan S., Pleasant Valley, Connecticut 0063 (US)
(74) Representative: Warren, Anthony Robert

(56) References cited:
- EP-A- 0 345 044
- EP-A- 0 873 975
- WO-A-00/56673
- GB-A- 2 297 548
- US-A- 3 407 055
- US-A- 4 108 623

## Description

The present invention relates to I.S. glass container forming machines and more particularly to the improved control of such machines.

In an I.S. machine, a gob of molten glass is formed into a parison within a blank mold and the formed parison is transferred to a blow station where blow mold parts or halves are closed around the parison, a blow head is positioned on top of the blow mold and the parison is blown by applying "final blow". The blown parison is cooled defining a formed bottle that can stand on its own whereupon the blow mold halves are opened and the bottle is transferred to a dead plate for additional cooling. The time between the closing of the blow mold halves and the application of final blow is referred to as reheat.

The time when events occur in an I.S. machine are conventionally controlled by an electronic timing drum or sequence controller. Set angles are set by the machine operator for blow mold close, blow head on, and final blow.

Machines of this general type are disclosed in US-A-4,108,623 and EP-A-0,873,975, in which a temperature or radiant energy sensor is used to detect when a molten glass gob arrives at a position above a blank mold. The timing signals from the sensor are input to a controller which controls the process of molding the parison in a blank mold.

Glassware forming machines are disclosed in WO-A-00/56673 and EP-A-0,345,044 in which a temperature or radiant energy sensor monitors the temperature of a mold or of glassware released from the mold. The sensor signals are input to a control which regulates the supply of coolant to the mold. The discussion of the background art in the latter EP-A-makes reference to attempts having been to monitor mold temperatures by putting a thermocouple within the mold.

US-A-3,407,055 discloses the use of vertically spaced radiant energy sensors which sense the length of a parison blown in an unconfined space, i.e. in the absence of a blank mold. The sensor signals are input to a control which adjusts the parison blowing process to adjust the length of the parison.

The present invention is directed to an I.S. machine generally as discussed in EP-A-0,345,044 and as defined in the preamble of claim 1.

It is an object of the present invention to provide an I.S. glass container forming machine which has a better controlled process for forming the bottle or other glass container in the blow mold.

According to the present invention, there is provided an I.S. machine as defined in the characterizing clause of claim 1.

Reference will now be made to the accompanying drawings which illustrate a presently preferred embodiment incorporating the principles of the invention, and in which:-
Figure 1 is a schematic illustration of a blow station of an I.S. machine; and
Figure 2 is a logic diagram showing the operation of the blow station.

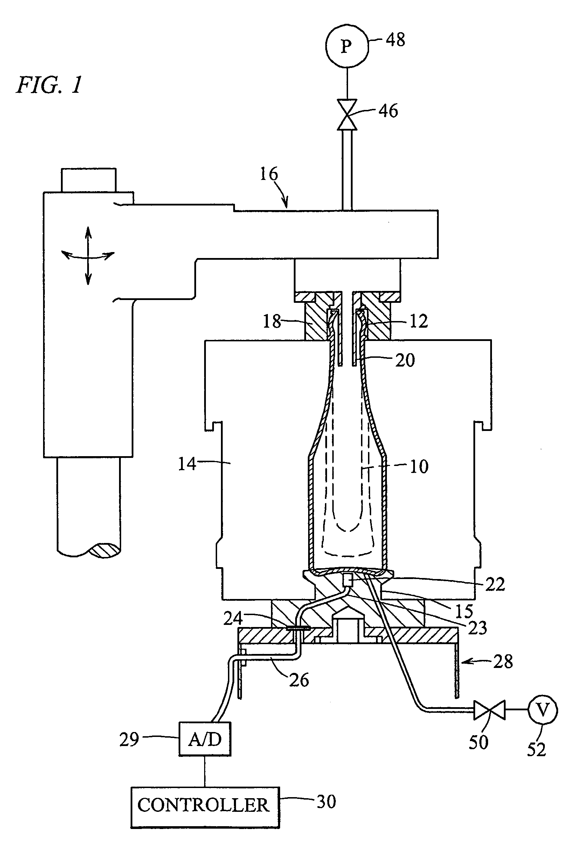

Figure 1 is a schematic illustration of a blowhead mechanism of an I.S. machine. A parison 10 which has a formed finish (threaded portion) 12 at the top is suspended from the finish 12 by an invert mechanism (not shown). A pair of opposed blow mold halves 14 are displaced from a separated open position to the illustrated closed position supporting the parison just below the finish and engaging a bottom plate 15 to close the bottom of the mold. The blowhead mechanism 16, which supports a blowhead 18, is displaced downwardly and pivotally locates the blowhead around the finish with a blow pipe 20 of the blowhead within the parison. As the supported parison reheats, it will, under its own weight stretch downwardly. When the parison reaches the bottom of the mold it will engage the bottom plate 15 and heat transfer to the bottom plate will raise the temperature of a thermocouple 22 which is mounted in the bottom plate. The thermocouple wire 23 connects at a junction 24 to a wire 26 leading from a bottom plate support 28 to an A/D converter 29 which converts the analog voltage to a digital signal that can be processed by a controller 30. When the parison touches the thermocouple, a voltage spike will be generated that can be identified by the controller as a Parison Touches Thermocouple signal.

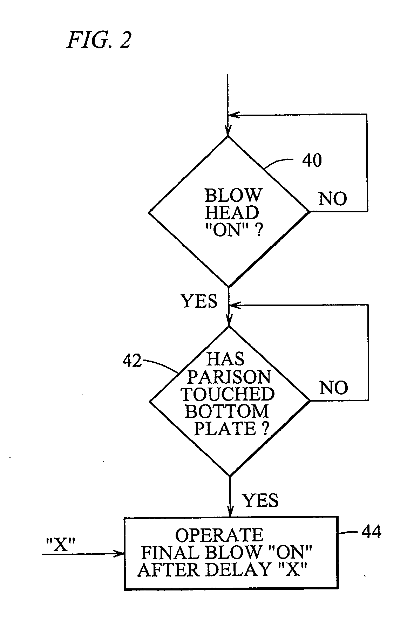

Figure 2 illustrates the logic diagram showing the operation of the control. When the angle on the programmable sequencer (such as the electronic timing drum or sequence controller referred to earlier) reaches a set angle the query is Blowhead On? 40 will be answered in the affirmative and the next query to be answered is Has Parison Touched Bottom Plate? 42. When the touching of the thermocouple by the parison is determined, the control will Operate Final Blow "On" After Delay "X" 44 (the delay is selectable and could be positive, negative, or zero) to blow the parison (a valve 46 shown in Figure 1 and controlling flow from a source of pressurized air P/48 will be opened). The rest of the cycle will then follow.

While, for purposes of explanation, the blowing of the parison is described by the phrase final blow, it should be understood that this phrase also equates to operating vacuum "on" where the bottle is formed with vacuum, i.e. negative pressure, rather than with positive pressure. In this case a valve 50 controlling flow from a source of vacuum V/52 will be opened. Thus, the terms "blow", "blowing", etc., used in the description and claims are to be construed as encompassing this alternative.

## Claims

1. An I.S. machine including a forming station for forming a container from a parison having a formed finish portion (12), comprising
a forming station including a forming mold having side (14) and bottom (15) portions, for supporting a parison (10),
a source (48; 52) of forming air,
valve means (46; 50) for selectively connecting the source of forming air to the forming mold to form the parison into a container,
heat sensor means (22) in the mold, and
control means (30) for receiving signals from the heat sensor means,
**characterised in that**
the heat sensor means (22) is mounted in the bottom portion (15) of the forming mold, and is operable to generate a "parison at bottom of mold" signal, and
the control means (30) is operable to operate said valve means to connect the source of forming air to the forming mold based on the time when the "parison at bottom of mold" signal occurs.

2. An I.S. machine according to claim 1, wherein said heat sensor means (22) is a thermocouple.

3. An I.S. machine according to claim 1 or 2, wherein said source of forming air is a source of air under pressure (48).

4. An I.S. machine according to claim 1 or 2, wherein said source of forming air is a source of air under a vacuum (52).

5. An I.S. machine according to any preceding claim, wherein said control means (30) operates said valve means (46; 50) when the "parison at bottom of mold" signal occurs plus or minus a selected delay.

## Patentansprüche

1. IS-Maschine mit einer Formstation zum Formen eines Behälters aus einem Külbel mit einem geformten Abschlußabschnitt (12), umfassend:
eine Formstation, umfassend eine Form mit Seiten- (14) und Boden- (15) Abschnitten zum Halten eines Külbels (10),
eine Quelle (48; 52) von Formluft,
eine Ventileinrichtung (46; 50) zum wahlweisen Verbinden der Formluft-Quelle mit der Form, um das Külbel in einen Behälter zu formen,
eine Wärmesensoreinrichtung (22) in der Form und
eine Steuereinrichtung (30) zum Empfangen von Signalen von der Wärmesensoreinrichtung,
**dadurch gekennzeichnet, daß**
die Wärmesensoreinrichtung (22) im Bodenabschnitt (15) der Form befestigt ist und so betrieben werden kann, daß sie ein "Külbel am Boden der Form"-Signal erzeugen kann, und daß
die Steuereinrichtung (50) so betrieben werden kann, daß die Ventileinrichtung die Formluft-Quelle mit der Form zu der Zeit verbindet, wenn das "Külbel am Boden der Form"-Signal auftritt.

2. IS-Maschine nach Anspruch 1, wobei die Wärmesensoreinrichtung (22) ein Thermoelement ist.

3. IS-Maschine nach Anspruch 1 oder 2, wobei die Quelle von Formluft eine Quelle von Druckluft (48) ist.

4. IS-Maschine nach Anspruch 1 oder 2, wobei die Quelle von Formluft eine Quelle von Vakuumluft (52) ist.

5. IS-Maschine nach einem der vorangegangenen Ansprüche, wobei die Steuereinrichtung (30) die Ventileinrichtung (46; 50) mit oder ohne ausgewählte Verzögerung betreibt, wenn das "Külbel am Boden der Form"-Signal auftritt.

## Revendications

1. Machine à section individuelle comprenant une station de formage pour former un récipient à partir d'une paraison comportant une partie terminale formée (12) comprenant :
une station de formage comprenant un moule de formage comportant des parties latérale (14) et inférieure (15), pour supporter une paraison (10),
une source (48 ; 52) d'air de formage,
des moyens formant vanne (46 ; 50) pour relier de manière sélective la source d'air de formage au moule de formage pour former la paraison en un récipient,
des moyens formant capteur de chaleur (22) dans le moule, et
des moyens de commande (30) pour recevoir des signaux des moyens formant capteur de chaleur,
**caractérisée en ce que**
les moyens formant capteur de chaleur (22) sont montés dans la partie inférieure (15) du moule de formage, et peuvent être mis, en oeuvre pour générer un signal « paraison dans la partie inférieure de moule », et
les moyens de commande (30) peuvent être mis en oeuvre pour actionner lesdits moyens formant vanne pour relier la source d'air de formage au moule de formage sur la base de l'instant auquel le signal « paraison dans la partie inférieure de moule » apparaît.

2. Machine à section individuelle selon la revendication 1, dans laquelle lesdits moyens formant capteur de chaleur (22) sont un thermocouple.

3. Machine à section individuelle selon la revendication 1 ou 2, dans laquelle ladite source d'air de formage est une source d'air sous pression (48).

4. Machine à section individuelle selon la revendication 1 ou 2, dans laquelle ladite source d'air de formage est une source d'air sous vide (52).

5. Machine à section individuelle selon l'une quelconque des revendications précédentes, dans laquelle lesdits moyens de commande (30) actionnent lesdits moyens formant vanne (46 ; 50) à l'instant auquel le signal « paraison dans la partie inférieure de moule » apparaît plus ou moins un retard sélectionné.
